# EUROPEAN PATENT SPECIFICATION

(11) **EP 4 544 475 B1**
(45) Date of publication and mention of the grant of the patent: **08.04.2026**
(21) Application number: 23735001.2
(22) Date of filing: 23.06.2023
(51) Int. Cl.: G06Q 10/08, G06Q 10/083, G06Q 10/0831, G06Q 10/0833, G06Q 10/0835

(54) **A COMPUTER IMPLEMENTED METHOD AND SYSTEM FOR ENSURING THE SUCCESSFUL INTERNATIONAL SHIPPING OF A PARCEL**
COMPUTERIMPLEMENTIERTES VERFAHREN UND SYSTEM ZUR SICHERSTELLUNG DES ERFOLGREICHEN INTERNATIONALEN VERSENDENS EINES PAKETS
PROCÉDÉ ET SYSTÈME MIS EN UVRE PAR ORDINATEUR POUR ASSURER LE SUCCÈS DE L'EXPÉDITION INTERNATIONALE D'UN COLIS

(30) Priority: 23.06.2022 EP 22180726
(43) Date of publication of application: 30.04.2025
(73) Proprietor: Holocene GmbH, 10435 Berlin (DE)
(72) Inventor: LEKSHMINARAYANAN, Navneet, 12347 Berlin (DE); FAYOLLE, Romain, 10961 Berlin (DE)
(74) Representative: Plougmann Vingtoft a/s
(86) International application number: PCT/EP2023/067135
(87) International publication number: WO 2023/247761

(56) References cited:
- WO-A1-2015/057703
- US-A1- 2021 049 548
- US-B2- 8 626 674

## Description

### FIELD OF THE INVENTION

The present invention relates to the international shipping of parcels between at least a first and second legal entity, such as a first and second customs legality check.

### BACKGROUND OF THE INVENTION

When shipping parcels internationally it is not uncommon for said parcel to be held back in customs, due to ever changing requirements regarding documentation for international shipping of parcels between various countries. Most requirements can be found either in the world trade organizations databases or in national shipping requirement databases. Other requirements may change fast, not being updated in time for a shipped parcel to reach a target destination due to said changes, where the parcel may end up in customs, resulting in loss of goods within the supply chain. Even further, some shipping obstacles may not be found on any national or international shipping database, but may be found on secondary databases or websites relating to a specific shipping port.

In the following, such non-official requirements is denoted as unofficial regulatory shipping data and/or requirements. An example of such unofficial regulatory shipping data of tacit agreements between states, is an agreement brokered by the US between Israel and Saudi Arabia, which has resulted in Turkey having more checks and delays when shipping to/through Saudi Arabia.

From Going International 2022 - Experience and prospects of German business in foreign business - results of a company survey; Deutscher Industrie- und Handelskammertag; page 10:
"Companies feel the increase in trade barriers most strongly in their business with the United Kingdom. After 39 percent in the previous year, now 45 percent of companies report an increase in trade barriers - more than in any other region. With the UK's exit from the EU single market, German companies must prepare for numerous changes in their British foreign business - even one year after the EU-UK Trade and Cooperation Agreement came into force. In China, too, the share of companies that perceive more trade barriers increases slightly compared to the previous survey (35 percent after 33 percent previously) [...]".

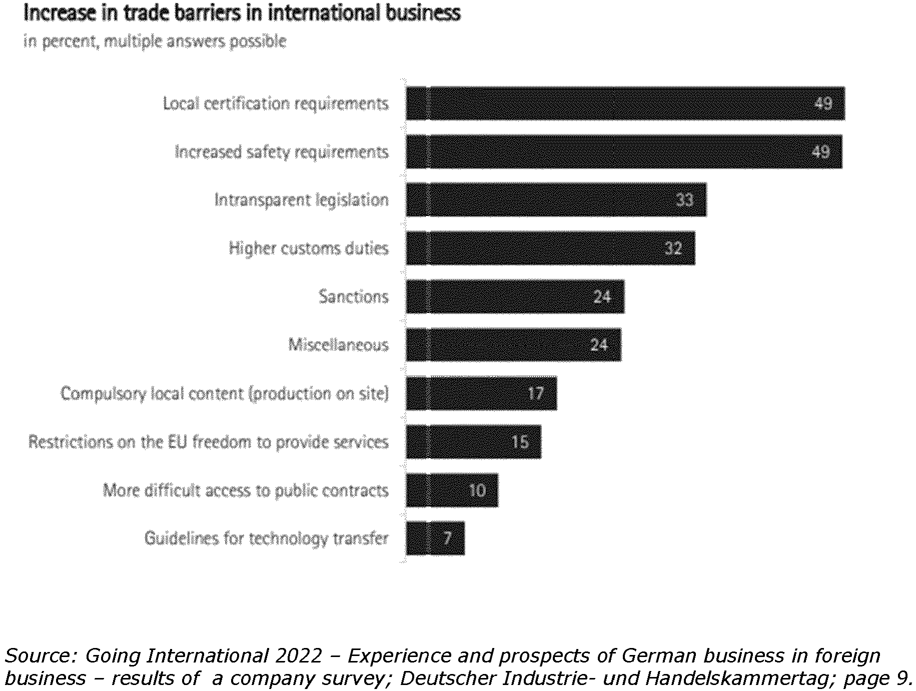

As an example, importers are responsible for:
- Securing, submitting, validating and documenting accurate data.
- Storing and retaining data as required by law.
- Auditing and reviewing data regularly, such as value, country of origin, composition, and claims for reduced duty or duty free imports.
- Creating descriptions of your merchandise that adhere to the most up-to-date regulations.
- Declaring assists, commissions, and royalties.
- Mark all articles with the country of origin and manufacturer.

Failure to adhere to proper Customs Compliance standards can result in:
- Fines and penalties.
- Liquidated damages.
- Various import compliance audits.
- Increased costs of international business.
- Disruptions and delays.
- Loss of import privileges.

When parcels are held back in customs, the goods within said parcel may deteriorate or expire, the goods may be destroyed as the rightful owner is not aware of the withholding and the time limit for responding with customs expires, or the expense associated with having the parcel released from customs may surpass the value of the goods within the parcel.

Hence, an improved method for preventing parcels from being withheld in customs would be advantageous, and in particular a more efficient and/or reliable method for updating customs information relating to specific parcels during transit would be advantageous.

### OBJECT OF THE INVENTION

It is an object of the present invention to provide a method and system for decreasing the probability of a parcel being shipped internationally, being withheld in customs due to a lack of sufficient disclosure in customs documents.

In particular, it may be seen as an object of the present invention to provide a computer-implemented method and system that solves the above mentioned problems with parcels being held back in customs due to insufficient customs documentation relating to a specific parcel.

### SUMMARY OF THE INVENTION

The invention is set out in the appended set of claims.

Thus, the above-described object and several other objects are intended to be obtained in a first aspect of the invention by providing a computer-implemented method adapted to prevent a parcel from being held back in customs during international shipping, the method comprising:
- providing a user interface adapted to receive and provide input/output regarding the parcel, from a subject depositing a parcel at a parcel drop-off point,
- inputting shipping parameters to the user interface, the shipping parameters comprising:
   - a first location,
   - a second location,
- inputting parcel parameters to the user interface, the parcel parameters comprising at least:
   - dimension boundary conditions of parcel,
   - content(s) of parcel,-parcel weight,
- providing at least a first database, the first database comprising:
   - official regulatory shipping requirements of at least the first and second location, such as customs compliance rules for parcels,
   - unofficial regulatory shipping requirements of at least the first and second location, such as not yet published legal changes regarding export or import of parcels,
- applying a learning algorithm to the database and shipping and parcel parameters, the learning algorithm being provided with tracking and shipping data of successfully sent parcels between at least the first and second location, said learning algorithm being adapted to update the official and unofficial regulatory shipping data of the database,
- comparing the official and unofficial regulatory shipping requirements with the provided shipping and parcel parameters, to detect any missing data,
- requesting any missing data from the user, and
- enabling the parcel drop-off point to accept the parcel for shipping.

In an alternative embodiment, the invention relates to a computer-implemented method for preventing a parcel from being held back in customs during international shipping, the method comprising:
- providing a user interface adapted to receive and provide input regarding the parcel, such as from or to a user or an associated system,
- inputting shipping parameters to the user interface, the shipping parameters comprising:
   - a first location, the first location being the present location of the parcel,
   - a second location, the second location being the desired target location of the parcel,
   - optionally further inputting duration of shipping boundary conditions, such as a maximum of 5, 10, 20, 30 or 40 days of duration of shipping,
- inputting parcel parameters to the user interface, the parcel parameters comprising at least one of:
   - dimension boundary conditions of parcel,
   - content(s) of parcel,
   - shape of parcel,
   - exterior characteristics of parcel, such as the parcel being a bag, a wooden box, a cardboard box or a metal container,
   - parcel weight,
- providing at least a first database, the first database comprising:
   - official regulatory shipping data and/or requirements of at least the first and second location, such as customs compliance rules for parcels,
   - unofficial regulatory shipping data and/or requirements of at least the first and second location, such as not yet published legal changes regarding export or import of parcels,
- applying a learning algorithm to the database and shipping and parcel parameters, the learning algorithm being provided with tracking and shipping data of successfully sent parcels between at least the first and second location, said learning algorithm being adapted to update the official and unofficial regulatory shipping data of the database, and
- providing any required export and/or import customs information regarding the parcel from the learning algorithm, such as to a user or a secondary database linked to the parcel.

The invention is particularly, but not exclusively, advantageous for obtaining a method of preventing parcels from being deposited at local drop-off points, such as a kiosk, without the user shipping the parcel, first providing sufficient data related to said parcel, to ensure that said parcel is not prevented from reaching its intended destination. Thus, the computer-implemented method ensures that all relevant parameters and data related to the parcel is sufficiently input by the user and an, when relevant, by the algorithm of the present invention. Further, the invention may provide some information to a user intending to ship a parcel, notifying the user that further information or requirements are to be satisfied, to ensure that the parcel reaches the intended destination. As an example, an import country may require certain goods of a parcel to be shipped in a specific container or by a specific method. In such examples, the present invention notifies the user of such requirements, enabling the user to mitigate any consequences of lack of compliance.

Further, the invention is particularly, but not exclusively, advantageous for obtaining a method of increasing the probability of a parcel reaching its intended destination. As parcels arrive at their desired target location on time, the need for supplemental purchase of goods within parcels being held back are reduced, thus reducing overall waste, time and fiscal spending on resupplying.

Another advantage of the present invention is the reduction of waste, due to parcels being held back in customs thereby spoiling goods within said parcel. Thus, the invention may reduce waste as a result of international shipping, by reducing the amount of parcels being destroyed when in the customs possession.

Yet another advantage of the present invention is the reduced time spent by logistics personnel, trying to communicate with customs in order to release a withheld parcel from customs.

Even yet another advantage of the present invention is the reduced need for storage capacity for customs authorities, as the present invention reduce the amount of parcels being held back by said customs, thus reducing total amount of parcels being held back at any given time.

Even further, the present invention may reduce the overall CO2 expenditure related to international shipping, as a parcel held back in customs may result in substantial relocation of said parcel between various customs storage facilities during the withholding.

In the context of the present invention, a parcel is to be understood as any element suitable for containing goods, such as a package, box, container or postal bag, and wherein the element is suitable for shipping of said goods. As an example, a postal bag may be used to ship a plurality of letters. As another example, a box may be used for the shipping of electronics. As yet another example a container may be a cold storage fridge/freezer container, containing perishable goods, such as meat or vegetables.

In the context of the present invention, international shipping is to be understood as the transport of an object, such as a parcel, between a first country / first sovereign state and a second country / second sovereign state, wherein the parcel is the subject of customs examination when transitioning from the first country to the second country. Further, it is to be understood that countries, which do not abide by international trade law may not have an official customs authority, such as a country currently at war or a country without an official government. Where no officially instated customs authority is present, unofficial regulatory shipping data may be used to successfully ship a parcel to its target destination.

It is further to be understood, that some countries have export declarations and import declarations, i.e. requirements regarding the shipping of parcels across borders, while some countries only have import or export declarations/requirements. In some cases, declarations are related to countries, in other cases, the declarations are related to specific goods/products.

In the context of the present invention, a user interface is to be understood as the combination of software that is designed to allow a computer user to interact with the operating system of a machine or system, such as by selecting presented options or entering text commands, and a display device adapted to display said software and an input device, such as a keyboard. The user interface may be integrated into a smartphone or tablet with a touchscreen or a conventional computer with a screen, keyboard and/or mouse for inputting and displaying relevant information. Further, in some embodiments, the user interface may be stored on a cloud-based system, to be executed on a work terminal, such as a computer connected to the cloud based system.

Further, in the context of the present invention, the user is typically a professional shipper, hired by a customer to ship a package between a first and second location. In some occasions, the customer is a seller of goods at the current location of the goods, which needs to ship the goods from the current location, i.e. a first location, to a second location. On other occasions, the customer is a purchaser of goods, having purchased the goods from a first location different from the customer's location and needs the goods shipped to the customer's current location, i.e. the second location. In short, the user is a person affiliated with shipping and a customer is the rightful owner of the parcel to be shipped.

In the context of the present invention, an associated system is to be understood as a peripheral system, such a shipping or logistics system different from the present invention or a system or software system integrated in a computer parallel to the present invention.

In the context of the present invention, shipping parameters is to be understood as parameters related to the geographical and temporal aspect of transporting a parcel, such as, but not limited to, the current location of the parcel and the target location of the parcel. It is further to be understood, that shipping boundary conditions is to be construed as a desired and/or required maximum or minimum time limit for a parcel to ship between the first location and the second location.

In the context of the present invention, parcel parameters is to be understood as any relevant physical parameters relating to a parcel, such as, but not limited to the dimension boundary conditions of parcel, i.e. the size of the parcel, such as length, width and height of the parcel, the content(s) of the parcel, the shape of the parcel. Further, the parcel parameters may relate to the exterior characteristics of parcel, such as the parcel being a bag, a wooden box, a cardboard box or a metal container. Even further, the parcel parameters may relate to the weight of the parcel.

Thus, it is to be understood, that shipping parameters and parcel parameters are related to any information, which may be relevant for a specific parcel, when said parcel is to be shipped from a first location to a second location.

In the context of the present invention, database is to be understood as a collection of data organized especially for rapid search and retrieval, such as by a computer.

In the context of the present invention, customs is to be understood as any authority overseeing duties, tolls, or imposts imposed by the sovereign law of a country or state on goods imported or exported. Under some circumstances, such as due to civil war or other force majeure occurrences, an official customs body may not be present and under those particular circumstances, unofficial regulatory shipping data may contain necessary information for a parcel to reach a desired target location.

In the context of the present invention, customs compliance is the practice of respecting and following all regulations on imports or exports related to a country or sovereign state. Official regulatory shipping data is any official requirements available from said country or sovereign state for a parcel to legally be imported or exported. Further, other requirements for a parcel to arrive successfully may be present, i.e. unofficial regulatory shipping data, wherein the machine learning algorithm compile both sets of data in order to provide any required export and/or import customs information regarding the parcel. Further, it may be understood that a customs form, which holds the required sections/fields for data to be filed, may be different between various countries. As an example, in some countries the estimated value of a parcel and total weight is to be provided. As a further example, to ship to/from Brazil, the weight of a parcel is to be documented with three decimals, i.e. a parcel weighing 1 kilogram is to be documented as weighing 1.000 kilograms.

Thus, the present invention provides a method to arrange the data which is relevant for a parcel to be exported from a first location, i.e. a first country, to a second location, i.e. a target location in a second country, and provide a user or the parcel with the required export and/or import customs information, such as filling out custom declaration forms.

In the context of the present invention, a learning algorithm is to be understood as software within computer science employing machine learning, i.e. the process by which a computer is able to improve its own performance by continuously incorporating new data into an existing statistical model. In some embodiments, the learning algorithm is a deep learning algorithm, i.e. a neural network with three or more layers. A neural networks attempt to simulate the behaviour of the human brain, allowing it to learn from large amounts of data. While a neural network with a single layer can still make approximate predictions, additional hidden layers can help to optimize and refine for further accuracy.

In a preferred embodiment of the invention, the method further comprises providing optical character recognition (OCR) adapted to convert non-editable text into editable, i.e. recognizable text. As an example, optical character recognition may convert a physical document into a digital and editable document or a non-editable digital document, such as a PDF file into an editable digital document, such as a Microsoft Word document. It is further to be understood, that optical character recognition may comprise means for reading a physical document, such as a scanner and/or software adapted to convert non-editable digital documents, such as documents provided by the means for reading/scanning the physical document, into editable digital documents.

In another embodiment of the invention, the optical character recognition is a device, adapted to scan and convert physical documents into digital editable documents.

It is further to be understood, that any documents converted by an optical character recognition device or software may be provided to the present invention, in any of the steps according to the method. As an example, a physical document scanned and processed by OCR, may provide parameters for shipping, parcel or other, such as official or unofficial regulatory shipping data and/or requirements.

Even further, it is to be understood that any document data provided by OCR may be used to improve the learning algorithm or update at least the first database.

In the context of the present invention, tracking and shipping data of successfully sent parcels is to be understood as accumulated empirical data provided to the learning algorithm by the continued shipping of parcels. As an example, if one or more parcel(s) has/have previously been shipped between Germany and Australia and an obstacle along the shipping route arose, causing the parcel to be apprehended by customs, the learning algorithm may flag this route for future parcels, as a possibly not feasible route of shipping. The learning algorithm may further use the empirical data to provide an alternative route between Germany and Australia, such as through the New Zealand Customs authorities or to correct a found reason for previously failed shippings to occur, preventing future shippings to succeed or at least improve the possibility of future shipping to succeed.

In a preferred embodiment of the invention, the method further comprises:
- providing the parcel with any required export and/or import customs information, such as digitally or physically imprinting the parcel or updating the secondary database.

This embodiment is particularly advantageous for providing the parcel with required information, such as customs forms, which are filled out and printed or labelled onto said parcel, or, where applicable, providing the parcel with a digital copy of said customs information. In some embodiments, the parcel is pre-labelled with a physical/digital code, such as a barcode or QR code and the method may provide means of scanning said physical/digital code and uploading relevant export and/or import customs information to a database through said physical/digital code. In other embodiments, the method further comprises the provision of a label printer and labelling mechanism to provide the parcel with a physical version of the relevant export and/or import customs information. Even further, in some embodiments, the present invention comprise the provision of both physical and digital imprints for a parcel.

In another preferred embodiment, the method further comprises:
- providing the first database with one or more of the following obstacle parameters:
   - port conditions, such as airport or maritime port conditions,
   - trade embargo conditions,
   - congestion data,
   - fine and/or penalty fee data in case of an obstructed shipping,
   - customer risk assessment data, and
- providing one or more shipping route(s) based on the obstacle parameters.

This embodiment is particularly advantageous for ensuring that the parcel arrives at a target/destination location on time, as the learning algorithm is provided with updated information relating to relevant shipping obstacle parameters which may not be apparent from empirical data, such as recently emerged issues at a commonly used shipping port. As an example, the Covid situation may present shippers with continuous shut-down of ports, which may be a relevant obstacle parameter for the learning algorithm to successfully provide a most-likely-to-succeed shipping route.

In the context of the present invention, customer risk assessment data relates to either the owner of the parcel prior to shipping or the customer who bought the parcel and needs the parcel shipped to a certain location. The risk assessment date may be one or more of: geopolitical risks, a customer's track record with respect to paying any fines arising during shipping, the risk a customer wishes to take with respect to having a parcel apprehended in customs or whether a customer is usually compliant with respect to correctly filing any relevant shipping and/or parcels parameters needed to provide relevant export and/or import customs information to the user and/or parcel.

Further, the congestion data may relate to statistical data provided to the learning algorithm, such as wherein the learning algorithm has data indicating that an abundance of parcels are shipped to the same port, indicating that congestion may arise, or any congestion / delays already in progress.

In the context of the present invention, geopolitical risks is to be understood as internal and external pressure on a company, when attempting to do business in a global market where two or more nations do not see eye to eye, and thus may place sanctions on said company, when doing business between or with both of said businesses. As an example, many global companies are seeking their own form of "strategic autonomy" to navigate China-US relations. Companies must consider how to harness capabilities such as 5G, AI or the provision of rare earth minerals, without falling victim to geopolitically based regulatory or reputational cross fire.

In yet another embodiment, the user may weight one or more of the obstacle parameters based on a priority, and wherein the learning algorithm provides a shipping route based on the weighted obstacle parameters.

In yet another preferred embodiment, the shipping parameters further comprises:
- providing one or more transit country data selected from:
   - official regulatory shipping data and/or requirements,
   - unofficial regulatory shipping data and/or requirements, and
- providing a selection of possible transit countries based on the shipping and parcel parameters, such as to a user.

In the context of the present invention, a transit country is to be understood as a country, which the parcel needs to pass through from the first location, to reach the second location.

In some embodiments, a parcel needs to transit through one or more countries to reach the second location, i.e. the parcels target location. Usually, a user, such as a professional shipper, has a preferred transit route including the one or more transit countries. Due to reasons, such as one or more of the obstacle parameters, the learning algorithm may flag an issue with one or more of said transit countries and wherein the present invention enables the provision of an alternative selection of transit countries.

This embodiment is particularly advantageous for a user to select a most-likely-to-succeed shipping of the parcel, wherein one or more of the parcel parameters, shipping parameters and obstacle parameters are considered and/or weighted with respect to a customer's requirements.

In an advantageous embodiment of the invention, the method further comprises:
- providing the learning algorithm with a selection of possible transit countries based on the shipping and parcel parameters and optionally a set of obstacle parameters,
- providing a selection of possible transit countries wherein the user can select one or more of the following expense parameters:
   - reduced CO2 footprint of the parcel,
   - faster time of arrival of the parcel,
   - reduced fiscal cost of shipping of the parcel,
   - social and/or ethical responsibility parameters,
   - political responsibility parameters, and
- providing one or more shipping route(s) based on the selected expense parameter(s), such as to a user.

In the context of the present invention social and ethical parameters is to be understood as corporate social responsibility (CSR) and may be governed or recommended by the UN, WTO or other bodies. Social and ethical responsibility parameters may cover at least one or more of the following parameters:
- Environmental responsibility:
   Environmental responsibility initiatives aim to reduce pollution and greenhouse gas emissions and the sustainable use of natural resources.
- Human rights responsibility:
   Human rights responsibility initiatives may involve providing fair labour practices (e.g., equal pay for equal work) and fair trade practices, and disavowing child labour.
- Philanthropic responsibility:
   Philanthropic responsibility may include things such as funding educational programs, supporting health initiatives, donating to causes, and supporting community beautification projects.
- Economic responsibility:
   Economic responsibility initiatives may involve improving the firm's business operation while participating in sustainable practices - for example, using a new manufacturing process to minimize wastage.

Further, in the context of the present invention, political responsibility parameters may be understood as ethical or law-related issues arising when shipping to or through non-democratic governments or governments at war. As an example, many companies have shown political responsibility as a response to the current war in Ukraine.

This embodiment is particularly advantageous for a shipper or a customer of a shipper to save on operations, but further to:
- strengthen a brand image, recognition and reputation,
- increase customer loyalty and sales,
- retain employees,
- access funding to increase operational growth,
- prevent excess waste related to the environment,
- reduce the risk of sanctions and/or fines,
- reduce the risk of a parcel being apprehended,
- increase safety for associated workers relevant to the process of shipping.

In a preferred embodiment, the method further comprises:
- providing the machine learning algorithm or the first database with weighting parameters configured to weight the expense parameters based on customer information data, and
- providing one or more shipping route(s) based on the selected expense parameter(s) and the weighting parameters.

In the context of the present invention, customer information data is related to one or more of the known preferences of a customer such as empirical data or specified requirements instructed by the customer.

This embodiment is particularly advantageous for shipping a parcel successfully while also reducing environmental impact during shipping and increasing safety for workers executing said shipping.

In another advantageous embodiment wherein the parcel is currently in transit between the first location and the second location, the method further comprises:
- updating the first database with:
   - official regulatory shipping data and/or requirements,
   - unofficial regulatory shipping data and/or requirements, and
**if** any official or unofficial shipping data and/or requirements are changed post shipping:
- providing the user and/or parcel with any required export and import customs information regarding the parcel,
   and/or
- providing the user with an alternative shipping route for the parcel from the parcel's current location to the second location.

It is to be understood, that a parcel currently in transit may be located in a transit country, on a maritime vessel in international waters or at any other location between the first and second location.

This embodiment is particularly advantageous for ensuring the continued successful international shipping of a parcel. As an example, one or more parameters related to expense, obstacle or shipping might have changed after the parcel has left the first location, and wherein the parameter is flagged by the learning algorithm as an issue, which may prevent the parcel from successfully reaching the second location. This embodiment ensures that such issues are mitigated. In some embodiments, the present invention may automatically or semi-automatically, such as upon the approval from the user, update any required export and/or import customs information and/or may redirect the shipping route for said parcel to ensure safe arrival of the parcel at the second location.

In a preferred embodiment of the invention, the first location of the parcel is a specific location within a first country and the second location is a specific location within a second country. This embodiment is particularly advantageous when shipping from/to countries which a divided into regions or states wherein different customs rules may apply between said regions or states. Thus, the invention may distinguish between any regional differences in import/export compliance for the safe and efficient shipping of a parcel.

In an advantageous embodiment of the invention, the method further comprises:
- providing the required export and/or import customs information, and
- providing the shipping parameters and/or parcel parameters,
to an associated logistics center selected to receive the parcel for sorting and/or shipping.

This embodiment of the invention is particularly advantageous for the safe communication between a user, such as a professional shipper, and any relevant affiliated logistics operators to ensure that all relevant information is continuously provided to said logistics operators for the shipping and/or handling of a parcel.

In another advantageous embodiment of the invention, the method further comprises:
- providing a selection of shipping options to the shipping parameters from one or more of:
   - land based shipping, such as train, truck or car,
   - marine based shipping,
   - air based shipping, and
- providing one or more shipping route(s) based on the selected shipping option(s).

This embodiment of the invention is particularly advantageous for providing any preferred method of shipping to the user. In some embodiments, the shipping options of the shipping parameters may indicate, that a customer prefers a specific method of shipping and the invention provides means to comply with the customer's preferred shipping method. In other embodiments, the user may be aware of a customer's preferred method of shipping and input said method, for the learning algorithm to provide one or more shipping routes based on the shipping options of the shipping parameters.

In a second aspect, the invention relates to a decision support system configured to provide a user with decision support in relation to the shipping of a parcel between a first location and a second location according to the first aspect of the invention.

This aspect of the invention is particularly advantageous for providing a user, such as a professional shipper, with decision support related to any risks and advantageous of selecting a shipping route for a parcel and/or for a user to weigh said risks and advantageous for a parcel prior to and during shipping of said parcel.

In a third aspect, the invention relates to a system configured to provide required export and import customs information regarding the shipping of a parcel between a first destination and a second destination, the system comprising:
- a processor,
- an input/output device adapted to receive and send data,
- a display device, and
wherein the system is configured with a memory, said memory storing instructions that, when executed on the processor enables the system to perform the computer implemented method according to the first aspect of the invention.

This aspect of the invention is particularly advantageous for a user, such as a professional shipper, when aiding a customer in the shipping of a parcel. The system may provide various information to said user relevant when selecting a shipping route, and further to reduce shipping duration, risk of deterioration of fragile or sensitive goods within parcels or flag/inform the user of any relevant trade embargos for goods within parcels.

In a preferred embodiment, the user is a private person with the intent of shipping a parcel from a first location to a second location without any substantial knowledge regarding customs regulations. In this embodiment, the system is adapted to aid said user in successfully shipping said parcel without contravening any sanctions causing the parcel to be intercepted in customs.

In another preferred embodiment of the invention, the system further comprises:
- a user interface adapted to receive and provide input/output regarding the parcel, such as from or to a user or an associated system, including but not limited to
   - shipping parameters, the shipping parameters comprising:
      - a first location, the first location being the present location of the parcel,
      - a second location, such, the second location being the desired target location of the parcel,
      - duration of shipping boundary conditions, such as a maximum of 5, 10, 20, 30 or 40 days of duration of shipping,
   - parcel parameters, the parcel parameters comprising at least one of:
      - dimension boundary conditions of parcel,
      - content(s) of parcel,
      - shape of parcel,
      - exterior characteristics of parcel, such as the parcel being a bag, a wooden box, a cardboard box or a metal container,
      - parcel weight,
- a first database, the first database comprising:
   - official regulatory shipping data and/or requirements of at least the first and second location, such as customs compliance rules for parcels,
   - unofficial regulatory shipping data and/or requirements of at least the first and second location, such as not yet published legal changes regarding export or import of parcels,
- a learning algorithm with access to the database and shipping and parcel parameters, the learning algorithm being provided with tracking and shipping data of successfully sent parcels between at least the first and second location, said learning algorithm being adapted to update the official and unofficial regulatory shipping data of the database, and
wherein the system is configured to output any required export and/or import customs information regarding the parcel from the learning algorithm, such as to a user or a secondary database linked to the parcel.

In an advantageous embodiment of the invention, the system is adapted to be implemented at a local drop-off point, the system further comprising:
- a receiving section adapted to receive the parcel from the user and
- a conveyor or chute adapted to convey said parcel from the receiving section to an outgoing parcel section at the drop-off point.

In another advantageous embodiment of the invention, the receiving section further comprises:
- a hatch defining an opening of the receiving section, and
- a locking mechanism adapted to secure the hatch when the system is not in use.

In yet another advantageous embodiment of the invention, the locking mechanism enables the hatch to be opened only when all relevant data and parameters have been provided by the user.

In yet another advantageous embodiment of the invention, the system further comprises a near-field data transmission module in data connection with the input/output device and/or the processor and wherein the user may upload preset data and parameters relating to the parcel, from an auxiliary device containing said preset data and parameters, to said near field data transmission module, such as a smartphone.

In another preferred embodiment, the system is a computer system.

In yet another preferred embodiment, the system is further configured to provide decision support to a user in relation to the shipping of a parcel from a first location to a second location, such as by providing information relevant to the user on the display device.

This embodiment of the invention is particularly advantageous for a user, such as a professional shipper, when aiding a customer in the shipping of a parcel. The system may provide various information to said user relevant when selecting a shipping route, and further to reduce shipping duration, risk of deterioration of fragile or sensitive goods within parcels or flag/inform the user of any relevant trade embargos for goods within parcels.

In an advantageous embodiment of the invention, the system is further configured to provide required export and/or import customs information and/or provide parcel parameters and/or shipping parameters to a database different from the first database.

This embodiment of the invention is particularly advantageous for the system to cooperate with one or more existing databases, such as a database from an associated logistics operator.

In a fourth aspect, the invention relates to the use of a system for providing decision support to a user, according to the third aspect of the invention.

In an embodiment of the invention, the invention further relates to the use of a system for automatically updating any required export and/or import customs information regarding a parcel, such as by digitally or physically imprinting the parcel. In some embodiments, the parcel is provided with a digital/physical code, such as a barcode or QR code and wherein the system uploads/downloads any required export and/or import customs information to a database linked to said digital/physical code and wherein an associated user or logistics system can scan the digital/physical code to view the required export and/or import customs information on a peripheral device, such as a digital device with a display.

In a fifth aspect, the invention relates to a computer program product enabling a computer system to carry out the operations of the system according to the third aspect of the invention, when downloaded or uploaded into the computer system.

This aspect of the invention is particularly, but not exclusively, advantageous in that the present invention may be accomplished by a computer program product enabling a computer system to carry out the operations of the system of the third aspect of the invention when down- or uploaded into the computer system. Such a computer program product may be provided on any kind of computer readable medium, or through a network.

The individual aspects of the present invention may each be combined with any of the other aspects. These and other aspects of the invention will be apparent from the following description with reference to the described embodiments.

### BRIEF DESCRIPTION OF THE FIGURES

The computer implemented method, system and computer program product according to the invention will now be described in more detail with regard to the accompanying figures. The figures show one way of implementing the present invention and is not to be construed as being limiting to other possible embodiments falling within the scope of the attached claim set.
Figure 1 is a schematic system-chart representing an out-line of the operations of the computer implemented method according to an embodiment of the invention.
Figure 2 is another schematic system-chart representing an out-line of the operations of the computer implemented method according to an embodiment of the invention.
Figure 3 shows a flow-chart of a method embodiment according to the invention.
Figure 4 is yet another schematic chart representing an outline of the operations of the invention, according to an embodiment of the invention.

### DETAILED DESCRIPTION OF AN EMBODIMENT

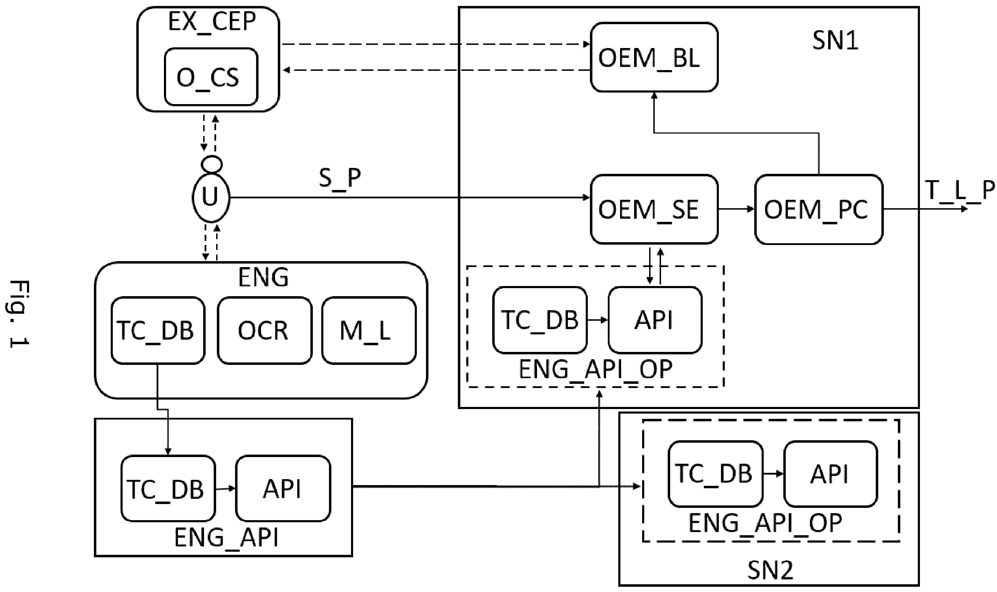

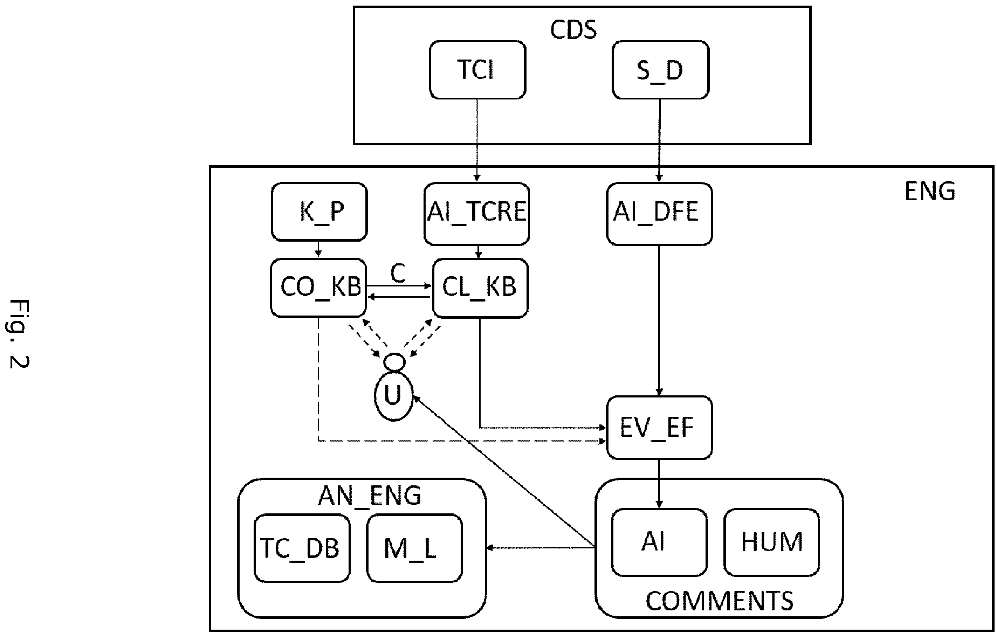

Figure 1 shows the interaction between the various systems of the computer implemented method. As a user U is tasked with sending a parcel from an existing customer engagement portal EX_CEP, the user U utilizes the computer program ENG to provide necessary information to export said parcel from its current location to a second location. The computer program ENG comprises a trade compliance database TC_DB with current information regarding trade compliance for any regulatory export requirements from the current location and any regulatory import requirements for the second location, such as official and non-official data and/or requirements. The computer program ENG further comprises a document optical character recognition engine OCR and a learning algorithm M_L adapted to update the trade compliance database TC_DB. The computer program ENG sends data from the trade compliance database TC_DB to an application programming interface API of the computer program ENG_API. As the user U sends the parcel S_P to a sorting network SN1, the parcel is handled by a third party or OEM sorting equipment OEM_SE. The OEM sorting equipment OEM_SE sends data with parcel information, such as origin of parcel, destination of parcel and HS code to an on-the-premises application programming interface ENG_API_OP, which is in data connection with the trade compliance database TC_DB and the application programming interface ENG_API of the computer program ENG. The on-the-premises application programming interface ENG_API_OP in turn provides the OEM sorting equipment OEM_SE with any relevant data, such as trade rules and requirements for the parcel. The OEM sorting equipment OEM_SE provides the parcel with relevant received data, such as trade rules, compliance forms, shipping labels and parcel weight data and forwards the data of the parcel to a third party or OEM policy classifier OEM_PC. If any discrepancies or errors in the data is detected by the OEM policy classifier OEM_PC are detected, the data is forwarded to a third party or OEM business logic system OEM_BL which in turn forwards any trade rule violations to the existing customer engagement portal EX_CEP. With the reported discrepancies or errors received at the existing customer engagement portal EX_CEP, the user U can utilize the computer program ENG to receive any non-correct documents, correct the documents either manually or automatically through the computer program ENG, and upload the correct documents to the existing customer engagement portal EX_CEP and update the computer program ENG, such as updating the trade compliance database TC_DB, which in turn may improve any future action taken by the leaning algorithm M_L. The corrected documents are then provided from the existing customer engagement portal EX_CEP to the OEM business logic to green light the parcel for through loading T_L_P. The bottom right portion of Figure 2 shows a second sorter network SN2, to illustrate that the computer program ENG is adapted to communicate and update any relevant data learned from an error occurring at a first sorting network, for any parcels shipped at a second sorting network SN2.

In the context of the present invention, a HS code is to be understood as a Harmonized System code, which is a standardized numerical method of classifying traded products. It is used by customs authorities around the world to identify products when assessing duties and taxes and for gathering statistics.

In a preferred embodiment, the computer program ENG receives any discrepancies or errors either directly from one of the OEM policy classifier OEM_PC or the OEM business logic system OEM_BL and corrects any documents prior to forwarding any errors, such as trade rule violations to the existing customer engagement portal EX_CEP, thus correcting any errors faster. It is further to be understood, that the computer program ENG may signal an error to the user U, prior to the sending of the parcel S_P.

Figure 2 shows a flow chart of the computer implemented method according to another embodiment of the invention. The top portion of the figure illustrates the client data sources CDS, such as trade compliance instructions TCI and shipping documents S_D for a parcel. The trade compliance instructions may comprise word documents, spreadsheets, emails, data from an enterprise resource planning system (ERP). The shipping documents S_D may comprise invoices, ERP data, emails, sharepoint folders or other relevant data regarding the parcel. The bottom portion of the figure illustrates the work flow of data within the computer program ENG. The trade compliance instructions TCI is forwarded to a trade compliance rule extractor AI_TCRE, such as an algorithm or machine learning algorithm adapted to extract all relevant data from the trade compliance instructions TCI. The AI_TCRE converts any relevant data into machine rules and data, and forwards said rules and data to a client knowledge database CL_KB. Further knowledge parameters K_P may be provided, which is forwarded to a common knowledge base CO_KB. The data of the common knowledge base CO_KB and the data of the client knowledge base are compared C, to identify any discrepancies or errors. If any discrepancies are detected they are forwarded to a user U for assessment. The client knowledge base CL_KB and/or the common knowledge base CO_KB may be updated based on the assessment performed by the user U. The shipping documents S_D are processed by a document features extractor AI_DFE, such an algorithm or a learning algorithm, adapted to extract all relevant data from the shipping documents S_D and forward said data, along with data from the CO_KB and/or the CL_KB to an evaluation process EV_EF, adapted to evaluate the trade rules on extracted features. Data from the EV_EF are assembled in a comments database COMMENTS, comprising machine generated comments AI and human comments HUM. The human comments may be any relevants comments, such as expert opinions on any trade rules, experience from shippers, customers or other. The data from comments COMMENTS are further provided to the analytics engine AN_ENG comprising the learning algorithm M_L and the trade compliance database TC_DB to update any relevant data and improve the learning algorithm M_L. Further, the COMMENTS are provided to the user U, to provide further data for the user U to assess any discrepancies between the CO_KB and the CL_KB, thus creating a positive feedback loop.

It is to be understood that the trade compliance instructions TCI may be used as data for the official or non-official regulatory data and/or requirements provided to the computer implemented method according to the first aspect of the invention. It is further to be understood, that the shipping documents S_D may be used as data for the shipping and/or parcel parameters provided to the computer implemented method according to the first aspect of the invention.

It is to be understood, that the AI_TCRE and/or the AI_DFE may comprise an OCR module adapted to read documents and convert said documents into digital documents for automatic reading/recognition purposes.

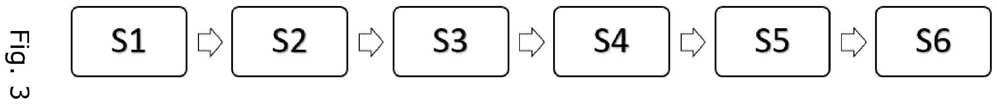

Figure 3 shows a flow chart of the steps comprised within an embodiment of the invention, the steps being at least the following:
S1-providing a user interface adapted to receive and provide input/output regarding the parcel, such as from or to a user or an associated system,
S2-inputting shipping parameters to the user interface, the shipping parameters comprising:
   - a first location,
   - a second location,
S3-inputting parcel parameters to the user interface, the parcel parameters comprising at least one of:
   - dimension boundary conditions of parcel,
   - content(s) of parcel,
   - shape of parcel,
   - exterior characteristics of parcel, such as the parcel being a bag, a wooden box, a cardboard box or a metal container,
   - parcel weight,
S4-providing at least a first database, the first database comprising:
   - official regulatory shipping data and/or requirements of at least the first and second location, such as customs compliance rules for parcels,
   - unofficial regulatory shipping data and/or requirements of at least the first and second location, such as not yet published legal changes regarding export or import of parcels,
S5-applying a learning algorithm to the database and shipping and parcel parameters, the learning algorithm being provided with tracking and shipping data of successfully sent parcels between at least the first and second location, said learning algorithm being adapted to update the official and unofficial regulatory shipping data of the database, and S6-providing any required export and/or import customs information regarding the parcel from the learning algorithm, such as to a user or a secondary database linked to the parcel.

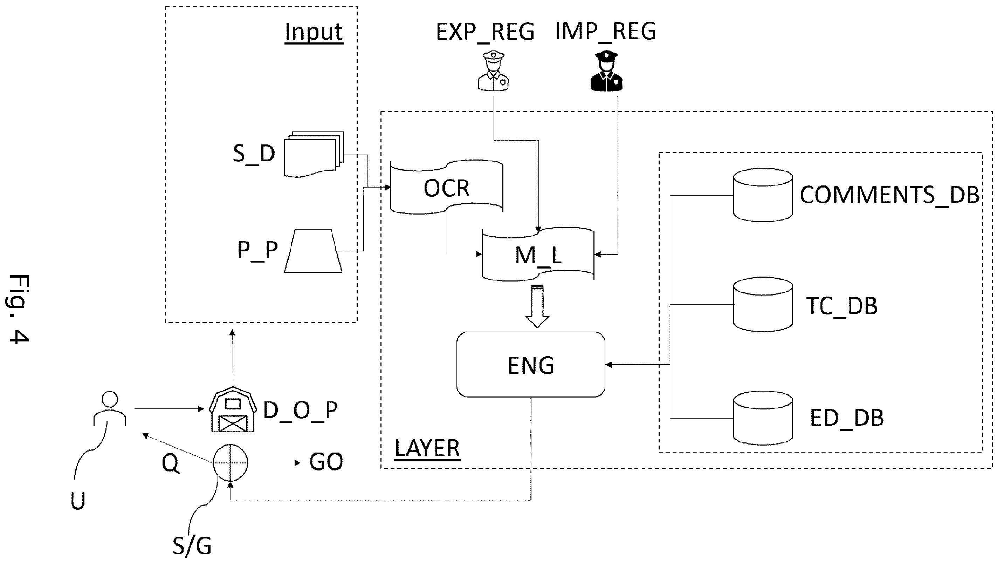

Figure 4 is yet another schematic chart representing an outline of the operations of the invention, according to an embodiment of the invention. Figure 4 shows a user U shipping a parcel from a parcel drop-off-point D_O_P. At the parcel drop-off-point D_O_P, the user inputs required shipping documentation S_D such as destination, into a user interface and relevant parcel parameters P_P, such as weight and content of the parcel. The input is received into the computer program ENG of the present invention through a document optical character recognition engine OCR. Through the document optical character recognition engine OCR, the learning algorithm M_L identifies relevant shipping and parcel parameters and requests relevant export and import regulations EXP_REG, IMP_REG, and retrieves relevant data from the databases; wherein the comments database COMMENTS_DB contains any unofficial regulatory shipping requirements, such as experiences input by experienced shipping professional, the trade compliance database TC_DB contains the official regulatory shipping requirements and relevant compliance rules related to both export, import and transit countries, the empirical shipping database ED_DB contains historical shipping data related to successful and/or unsecessfully shipped parcels. The learning algorithm M_L then assess all available data and compares S/G the official and unofficial regulatory shipping requirements TC_DB, COMMENTS_DB with the provided shipping and parcel parameters S_D, P_P, to detect any missing data. If the stop/go S/G comparison detect any missing data, the computer program ENG forwards a request REQ to the user U, to provide further input. When all data is accessible, the computer program ENG accepts the parcel and sends a GO signal to acknowledge receipt of a parcel for shipping. Within the layer LAYER, the following steps is achieved: OCR of any non-OCR text material relevant, including a web-crawler adapted to scrub trade-regulatory bodies, the machine algorithm adapted to convert and learn based on information provided, into suitable database formats, the databases; and wherein the computer program ENG connects all of the above to perform adaptive compliance checks and inquiries to e.g. the user.

In short, the invention relates to a computer-implemented method of decreasing the risk of a legal parcel to be held back in customs during import or export, due to any insufficient import/export forms or data on said forms. The method comprises the provision of data relating to said parcel, the current location of said parcel and a target location of said parcel and wherein the method comprises the provision of a database and learning algorithm adapted to provide necessary information, either automatically or to a user, such as a shipper, in order for any import/export documentation to be filled out and provided in a required manner. Thus, the present invention provides a method of reducing the amount of waste associated with shipping, as parcels held back may be destroyed, lost or due to other reasons not end up at the target location as expected.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A system configured to provide required export and import customs information regarding the shipping of a parcel between a first destination and a second destination, the system comprising:
- a processor,
- an input/output device adapted to receive and send data,
- a display device, and
the system is adapted to be implemented at a local drop-off point, the system further comprising:
- a receiving section adapted to receive the parcel from the user and
- a conveyor or chute adapted to convey said parcel from the receiving section to an outgoing parcel section at the drop-off point,
wherein the system is configured with a memory, said memory storing instructions that, when executed on the processor enables the system to perform a computer implemented method, wherein the computer-implemented method is adapted to prevent a parcel from being held back in customs during international shipping, the method comprising:
- providing a user interface adapted to receive and provide input/output regarding the parcel, from a subject (U) depositing a parcel at a parcel drop-off point (D_O_P),
- inputting shipping parameters (S_D) to the user interface, the shipping parameters comprising:
- a first location,
- a second location,
- inputting parcel parameters (P_P) to the user interface, the parcel parameters comprising at least:
- dimension boundary conditions of parcel,
- content(s) of parcel,-parcel weight,
- providing at least a first database, the first database comprising:
- official regulatory shipping requirements (TC_DB) of at least the first and second location, such as customs compliance rules for parcels,
- unofficial regulatory shipping requirements (COMMENTS_DB) of at least the first and second location, such as not yet published legal changes regarding export or import of parcels,
- applying a learning algorithm (M_L) to the database and shipping and parcel parameters, the learning algorithm being provided an empirical database (ED_DB) comprising tracking and shipping data of successfully sent parcels between at least the first and second location, said learning algorithm being adapted to update the official and unofficial regulatory shipping data of the database,
- comparing (S/G) the official and unofficial regulatory shipping requirements with the provided shipping and parcel parameters, to detect any missing data,
- requesting (REQ) any missing data from the user, and
- enabling the parcel drop-off point to accept the parcel for shipping (GO).

2. The system according to claim 1, wherein the computer-implemented method further comprising:
- providing the parcel with any required export and/or import customs information, such as digitally or physically imprinting the parcel or establish/update a secondary database linked to the parcel.

3. The system according to claim 1 or claim 2, wherein the computer-implemented method further comprising:
- providing the first database with one or more of the following obstacle parameters:
- port conditions, such as airport or maritime port conditions,
- trade embargo conditions,
- congestion data,
- fine and/or penalty fee data in case of an obstructed shipping,
- customer risk assessment data, and
- providing one or more shipping route(s) based on the obstacle parameters.

4. The system according to any of the preceding claims, wherein the shipping parameters further comprising:
- providing one or more transit country data selected from:
- official regulatory shipping data and/or requirements,
- unofficial regulatory shipping data and/or requirements, and
- providing a selection of possible transit countries based on the shipping and parcel parameters, such as to the user or a logistics center.

5. The system according to any of the preceding claims, wherein the The computer-implemented method method further comprising:
- providing the learning algorithm with a selection of possible transit countries based on the shipping and parcel parameters and optionally a set of obstacle parameters,
- providing a selection of possible transit countries wherein the user can select one or more of the following expense parameters:
- reduced CO2 footprint of the parcel,
- faster time of arrival of the parcel,
- reduced fiscal cost of shipping of the parcel,
- social and/or ethical responsibility parameters ,
- political responsibility parameters, and
- providing one or more shipping route(s) based on the selected expense parameter(s), such as to the user or a logistics center.

6. The system according to claim 5, wherein the computer-implemented method method further comprising:
- providing the machine learning algorithm or the first database with weighting parameters configured to weight the expense parameters based on customer information data, and
- providing one or more shipping route(s) based on the selected expense parameter(s) and the weighting parameters.

7. The system according to any of the preceding claims, while the parcel is in transit, the computer-implemented method further comprising:
- updating the first database with:
- official regulatory shipping data and/or requirements,
- unofficial regulatory shipping data and/or requirements, and
if any official or unofficial shipping data and/or requirements are changed post shipping:
- providing the user and/or parcel with any required export and import customs information regarding the parcel,
and/or
- providing the user or a logistics center with an alternative shipping route for the parcel from the parcel's current location to the second location.

8. The system according to any of the preceding claims, wherein the computer-implemented method further comprising:
- providing the required export and/or import customs information, and
- providing the shipping parameters and/or parcel parameters,
to an associated logistics center selected to receive the parcel for sorting and/or shipping.

9. The system according to any of the preceding claims, wherein the computer-implemented method further comprising:
- providing a selection of shipping options to the shipping parameters from one or more of:
- land based shipping, such as train, truck or car,
- marine based shipping,
- air based shipping, and
- providing one or more shipping route(s) based on the selected shipping option(s) to the user or a logistics center.

10. The system according to any of the preceding claims, wherein the parcel parameters further comprising at least one of:
- shape of parcel,
- exterior characteristics of parcel, such as the parcel being a bag, a wooden box, a cardboard box or a metal container.

11. The system according to claim 1, wherein the system is further configured to provide decision support to a user in relation to the shipping of a parcel from a first location to a second location, such as by providing information relevant to the user on the display device.

12. The system according to claim 1 or 11, wherein the system is further configured to provide required export and/or import customs information and/or provide parcel parameters and/or shipping parameters to a database different from the first database of claim 1.

13. The system according to claim 1, the receiving section further comprising:
- a hatch defining an opening of the receiving section,
- a locking mechanism adapted to secure the hatch when the system is not in use.

14. The system according to claim 13 wherein the locking mechanism enables the hatch to be opened only when all relevant data and parameters have been provided by the user.

15. The system according to any of claims 1 to 14, further comprising a near-field data transmission module in data connection with the input/output device and/or the processor and wherein the user may upload preset data and parameters relating to the parcel, from an auxiliary device containing said preset data and parameters, to said near field data transmission module, such as a smartphone.

16. Use of a system for providing decision support to a user, according to any of claims 1 to 15.

17. A computer program product enabling a computer system to carry out the operations of the system of claims 1 to 16 when downloaded or uploaded into the computer system.

## Patentansprüche

1. System, das so konfiguriert ist, dass es die erforderlichen Export- und Importzollinformationen für den Versand eines Pakets zwischen einem ersten Bestimmungsort und einem zweiten Bestimmungsort bereitstellt, wobei das System umfasst:
- einen Prozessor,
- eine Eingabe-/Ausgabevorrichtung, die zum Empfangen und Senden von Daten ausgelegt ist,
- eine Anzeigevorrichtung, und
das System ist so ausgelegt, dass es an einer lokalen Abgabestelle implementiert werden kann, wobei das System ferner umfasst:
- einen Empfangsbereich, der zum Empfangen des Pakets vom Benutzer ausgelegt ist, und
- einen Förderer oder eine Rutsche, die zum Befördern des Pakets vom Empfangsbereich zu einem Ausgangsbereich für Pakete an der Abgabestelle ausgelegt sind,
wobei das System mit einem Speicher konfiguriert ist, wobei der Speicher Anweisungen speichert, die, wenn sie auf dem Prozessor ausgeführt werden, das System in die Lage versetzen, ein computerimplementiertes Verfahren auszuführen, wobei das computerimplementierte Verfahren dazu ausgelegt ist, zu verhindern, dass ein Paket während des internationalen Versands vom Zoll zurückgehalten wird, wobei das Verfahren umfasst:
- Bereitstellen einer Benutzerschnittstelle, die dazu ausgelegt ist, Eingaben/Ausgaben bezüglich des Pakets von einer Person (U) zu empfangen und bereitzustellen, die ein Paket an einer Paketabgabestelle (D_O_P) abgibt,
- Eingeben von Versandparametern (S_D) in die Benutzerschnittstelle, wobei die Versandparameter umfassen:
- einen ersten Standort,
- einen zweiten Standort,
- Eingeben von Paketparametern (P_P) in die Benutzerschnittstelle, wobei die Paketparameter mindestens Folgendes umfassen:
- Abmessungsgrenzbedingungen des Pakets,
- Inhalt(e) des Pakets, - Gewicht des Pakets,
- Bereitstellen mindestens einer ersten Datenbank, wobei die erste Datenbank Folgendes umfasst:
- offizielle regulatorische Versandanforderungen (TC_DB) mindestens des ersten und zweiten Standorts, wie z. B. Zollvorschriften für Pakete,
- inoffizielle regulatorische Versandanforderungen (COMMENTS_DB) mindestens des ersten und zweiten Standorts, wie z. B. noch nicht veröffentlichte gesetzliche Änderungen bezüglich des Exports oder Imports von Paketen,
- Anwenden eines Lernalgorithmus (M_L) auf die Datenbank und die Versand- und Paketparameter, wobei der Lernalgorithmus mit einer empirischen Datenbank (ED_DB) versorgt wird, die Tracking- und Versanddaten von erfolgreich versendeten Paketen zwischen mindestens dem ersten und dem zweiten Standort umfasst, wobei der Lernalgorithmus so angepasst ist, dass er die offiziellen und inoffiziellen regulatorischen Versanddaten der Datenbank aktualisiert,
- Vergleichen (S/G) der offiziellen und inoffiziellen regulatorischen Versandanforderungen mit den bereitgestellten Versand- und Paketparametern, um fehlende Daten zu erkennen,
- Anfordern (REQ) fehlender Daten vom Benutzer und
- Ermöglichen, dass die Paketabgabestelle das Paket zum Versand annimmt (GO).

2. System nach Anspruch 1, wobei das computerimplementierte Verfahren ferner umfasst:
- Bereitstellen des Pakets mit allen erforderlichen Export- und/oder Importzollinformationen, beispielsweise durch digitales oder physisches Bedrucken des Pakets oder Einrichten/Aktualisieren einer mit dem Paket verknüpften sekundären Datenbank.

3. System nach Anspruch 1 oder Anspruch 2, wobei das computerimplementierte Verfahren ferner umfasst:
- Bereitstellen der ersten Datenbank mit einem oder mehreren der folgenden Hindernisparametern:
- Hafenbedingungen, wie Flughafen- oder Seehafenbedingungen,
- Handelsembargobedingungen,
- Staudaten,
- Daten zu Bußgeldern und/oder Strafgebühren im Falle einer behinderten Versendung,
- Daten zur Kundenrisikobewertung und
- Bereitstellen einer oder mehrerer Versandrouten auf der Grundlage der Hindernisparameter.

4. System nach einem der vorstehenden Ansprüche, wobei die Versandparameter ferner Folgendes umfassen:
- Bereitstellen einer oder mehrerer Transitlanddaten, ausgewählt aus:
- offiziellen regulatorischen Versanddaten und/oder - anforderungen,
- inoffiziellen regulatorischen Versanddaten und/oder -anforderungen und
- Bereitstellen einer Auswahl möglicher Transitländer auf der Grundlage der Versand- und Paketparameter, beispielsweise für den Benutzer oder ein Logistikzentrum.

5. System nach einem der vorstehenden Ansprüche, wobei das computerimplementierte Verfahren ferner umfasst:
- Bereitstellen des Lernalgorithmus mit einer Auswahl möglicher Transitländer auf der Grundlage der Versand- und Paketparameter und optional einer Reihe von Hindernisparametern,
- Bereitstellen einer Auswahl möglicher Transitländer, wobei der Benutzer einen oder mehrere der folgenden Kostenparameter auswählen kann:
- reduzierter CO2-Fußabdruck des Pakets,
- schnellere Ankunftszeit des Pakets,
- reduzierte fiskalische Kosten für den Versand des Pakets,
- soziale und/oder ethische Verantwortungsparameter,
- politische Verantwortungsparameter und
- Bereitstellen einer oder mehrerer Versandrouten auf der Grundlage der ausgewählten Kostenparameter, beispielsweise zum Benutzer oder zu einem Logistikzentrum.

6. System nach Anspruch 5, wobei das computerimplementierte Verfahren ferner umfasst:
- Bereitstellen des maschinellen Lernalgorithmus oder der ersten Datenbank mit Gewichtungsparametern, die so konfiguriert sind, dass sie die Kostenparameter auf der Grundlage von Kundeninformationsdaten gewichten, und
- Bereitstellen einer oder mehrerer Versandrouten auf der Grundlage der ausgewählten Kostenparameter und der Gewichtungsparameter.

7. System nach einem der vorstehenden Ansprüche, wobei das computerimplementierte Verfahren während des Transports des Pakets ferner umfasst:
- Aktualisieren der ersten Datenbank mit:
- offiziellen regulatorischen Versanddaten und/oder - anforderungen,
- inoffiziellen regulatorischen Versanddaten und/oder -anforderungen und
wenn offizielle oder inoffizielle Versanddaten und/oder
- anforderungen nach dem Versand geändert werden:
- Bereitstellen aller erforderlichen Export- und Importzollinformationen bezüglich des Pakets für den Benutzer und/oder das Paket,
und/oder
- Bereitstellen einer alternativen Versandroute für das Paket vom aktuellen Standort des Pakets zum zweiten Standort für den Benutzer oder ein Logistikzentrum.

8. System nach einem der vorstehenden Ansprüche, wobei das computerimplementierte Verfahren ferner umfasst:
- Bereitstellen der erforderlichen Export- und/oder Importzollinformationen und
- Bereitstellen der Versandparameter und/oder Paketparameter
an ein zugehöriges Logistikzentrum, das für den Empfang des Pakets zum Sortieren und/oder Versenden ausgewählt wurde.

9. System nach einem der vorstehenden Ansprüche, wobei das computerimplementierte Verfahren ferner umfasst:
- Bereitstellen einer Auswahl von Versandoptionen für die Versandparameter aus einer oder mehreren der Folgenden:
- Landtransport, wie z. B. Zug, LKW oder Auto,
- Seetransport,
- Lufttransport und
- Bereitstellen einer oder mehrerer Versandrouten auf der Grundlage der ausgewählten Versandoptionen für den Benutzer oder ein Logistikzentrum.

10. System nach einem der vorstehenden Ansprüche, wobei die Paketparameter ferner mindestens eines der Folgenden umfassen:
- Form des Pakets,
- äußere Merkmale des Pakets, wie beispielsweise, dass es sich bei dem Paket um eine Tasche, eine Holzkiste, einen Karton oder einen Metallbehälter handelt.

11. System nach Anspruch 1, wobei das System ferner so konfiguriert ist, dass es einem Benutzer Entscheidungsunterstützung in Bezug auf den Versand eines Pakets von einem ersten Standort zu einem zweiten Standort bietet, beispielsweise durch Bereitstellen von für den Benutzer relevanten Informationen auf der Anzeigevorrichtung.

12. System nach Anspruch 1 oder 11, wobei das System ferner so konfiguriert ist, dass es erforderliche Export- und/oder Importzollinformationen bereitstellt und/oder Paketparameter und/oder Versandparameter an eine Datenbank liefert, die sich von der ersten Datenbank nach Anspruch 1 unterscheidet.

13. System nach Anspruch 1, wobei der Empfangsbereich ferner umfasst:
- eine Klappe, die eine Öffnung des Empfangsbereichs definiert,
- einen Verriegelungsmechanismus, der dazu ausgelegt ist, die Klappe zu sichern, wenn das System nicht in Gebrauch ist.

14. System nach Anspruch 13, wobei der Verriegelungsmechanismus es ermöglicht, die Klappe nur dann zu öffnen, wenn alle relevanten Daten und Parameter vom Benutzer bereitgestellt wurden.

15. System nach einem der Ansprüche 1 bis 14, das ferner ein Nahfeld-Datenübertragungsmodul umfasst, das mit der Eingabe-/Ausgabevorrichtung und/oder dem Prozessor in Datenverbindung steht und wobei der Benutzer voreingestellte Daten und Parameter, die sich auf das Paket beziehen, von einer Hilfsvorrichtung, welche die voreingestellten Daten und Parameter enthält, auf das Nahfeld-Datenübertragungsmodul, beispielsweise ein Smartphone, hochladen kann.

16. Verwendung eines Systems zum Bereitstellen von Entscheidungsunterstützung für einen Benutzer nach einem der Ansprüche 1 bis 15.

17. Computerprogrammprodukt, das es einem Computersystem ermöglicht, die Operationen des Systems der Ansprüche 1 bis 16 auszuführen, wenn es in das Computersystem heruntergeladen oder hochgeladen wird.

## Revendications

1. Système configuré pour fournir les informations douanières requises à l'exportation et à l'importation concernant l'expédition d'un colis entre une première destination et une seconde destination, le système comprenant :
- un processeur,
- un dispositif d'entrée/sortie conçu pour recevoir et envoyer des données,
- un dispositif d'affichage, et
le système est conçu pour être mis en œuvre dans un point de dépôt local, le système comprenant en outre :
- une section de réception conçue pour recevoir le colis de l'utilisateur et
- un convoyeur ou une goulotte conçue pour acheminer ledit colis de la section de réception à la section d'expédition des colis au point de dépôt,
dans lequel le système est configuré avec une mémoire, ladite mémoire stockant des instructions qui, lorsqu'elles sont exécutées sur le processeur, permettent au système de réaliser un procédé mis en œuvre par ordinateur, dans lequel le procédé mis en œuvre par ordinateur est conçu pour empêcher qu'un colis ne soit retenu en douane lors d'une expédition internationale, le procédé comprenant :
- la fourniture d'une interface utilisateur conçue pour recevoir et fournir des entrées/sorties concernant le colis, d'un sujet (U) déposant un colis à un point de dépôt de colis (D_O_P),
- l'entrée des paramètres d'expédition (S_D) dans l'interface utilisateur, les paramètres d'expédition comprenant :
- un premier emplacement,
- un second emplacement,
- l'entrée des paramètres de colis (P_P) dans l'interface utilisateur, les paramètres de colis comprenant au moins :
- les conditions limites dimensionnelles du colis,
- le contenu du colis, -poids du colis,
- la fourniture au moins d'une première base de données, la première base de données comprenant :
- les exigences réglementaires officielles d'expédition (TC_DB) d'au moins les premier et second emplacements, telles que les règles de conformité douanière pour les colis,
- les exigences réglementaires non officielles en matière d'expédition (COMMENTS_DB) d'au moins les premier et second emplacements, telles que les modifications légales non encore publiées concernant l'exportation ou l'importation de colis,
- l'application d'un algorithme d'apprentissage (M_L) à la base de données et aux paramètres d'expédition et de colis, l'algorithme d'apprentissage étant alimenté par une base de données empirique (ED_DB) comprenant des données de suivi et d'expédition de colis expédiés avec succès entre au moins les premier et second emplacements, ledit algorithme d'apprentissage étant conçu pour mettre à jour les données d'expédition réglementaires officielles et non officielles de la base de données,
- la comparaison (S/G) des exigences réglementaires d'expédition officielles et non officielles avec les paramètres d'expédition et de colis fournis, afin de détecter une quelconque donnée manquante,
- la demande (REQ) d'une quelconque donnée manquante à l'utilisateur, et
- le fait de permettre au point de dépôt de colis d'accepter le colis pour l'expédition (GO).

2. Système selon la revendication 1, dans lequel le procédé mis en œuvre par ordinateur comprend en outre :
- la fourniture au colis de toutes les informations douanières requises pour l'exportation et/ou l'importation, par exemple en imprimant numériquement ou physiquement le colis ou en établissant/mettant à jour une base de données secondaire liée au colis.

3. Système selon la revendication 1 ou la revendication 2, dans lequel le procédé mis en œuvre par ordinateur comprend en outre :
- la fourniture à la première base de données d'un ou de plusieurs des paramètres d'obstacles suivants :
- les conditions portuaires, telles que les conditions aéroportuaires ou portuaires maritimes,
- les conditions d'embargo commercial,
- les données d'encombrement,
- les données relatives aux amendes et/ou pénalités en cas d'obstruction de l'expédition,
- les données d'évaluation des risques clients, et
- la fourniture d'un ou de plusieurs itinéraires d'expédition sur la base des paramètres d'obstacles.

4. Système selon l'une quelconque des revendications précédentes, dans lequel les paramètres d'expédition comprennent en outre :
- la fourniture des données sur un ou plusieurs pays de transit sélectionnés parmi :
- les données et/ou exigences réglementaires officielles en matière d'expédition,
- les données et/ou exigences réglementaires non officielles en matière d'expédition, et
- la fourniture d'une sélection de pays de transit possibles sur la base des paramètres d'expédition et de colis, par exemple vers l'utilisateur ou un centre logistique.

5. Système selon l'une quelconque des revendications précédentes, dans lequel le procédé mis en œuvre par ordinateur comprend en outre :
- la fourniture à l'algorithme d'apprentissage d'une sélection de pays de transit possibles sur la base des paramètres d'expédition et de colis et, éventuellement, d'un ensemble de paramètres d'obstacles,
- la fourniture d'une sélection de pays de transit possibles parmi lesquels l'utilisateur peut sélectionner un ou plusieurs des paramètres de dépenses suivants :
- empreinte carbone réduite du colis,
- délai de livraison du colis plus rapide,
- réduction des coûts fiscaux liés à l'expédition du colis,
- paramètres de responsabilité sociale et/ou éthique,
- paramètres de responsabilité politique, et
- la fourniture d'un ou de plusieurs itinéraires d'expédition sur la base des paramètres de dépenses sélectionnés, par exemple vers l'utilisateur ou un centre logistique.

6. Système selon la revendication 5, dans lequel le procédé mis en œuvre par ordinateur comprend en outre :
- la fourniture de l'algorithme d'apprentissage automatique ou de la première base de données avec des paramètres de pondération configurés pour pondérer les paramètres de dépenses sur la base des données d'information client, et
- la fourniture d'un ou de plusieurs itinéraires d'expédition sur la base des paramètres de dépenses sélectionnés et des paramètres de pondération.

7. Système selon l'une quelconque des revendications précédentes, pendant que le colis est en transit, le procédé mis en œuvre par ordinateur comprend en outre :
- la mise à jour de la première base de données avec :
- les données et/ou exigences réglementaires officielles en matière d'expédition,
- les données et/ou exigences réglementaires non officielles en matière d'expédition, et
si des données et/ou exigences d'expédition officielles ou non officielles, sont modifiées après l'expédition :
- la fourniture à l'utilisateur et/ou au colis toutes les informations douanières d'exportation et d'importation requises concernant le colis,
et/ou
- la fourniture à l'utilisateur ou à un centre logistique d'un itinéraire d'expédition alternatif pour le colis, de son emplacement actuel à un second emplacement.

8. Système selon l'une quelconque des revendications précédentes, dans lequel le procédé mis en œuvre par ordinateur comprend en outre :
- la fourniture des informations douanières requises pour l'exportation et/ou l'importation, et
- la fourniture des paramètres d'expédition et/ou des paramètres du colis,
vers un centre logistique associé sélectionné pour recevoir le colis en vue de son tri et/ou de son expédition.

9. Système selon l'une quelconque des revendications précédentes, dans lequel le procédé mis en œuvre par ordinateur comprend en outre :
- la fourniture d'une sélection d'options d'expédition sur la base des paramètres d'expédition, à partir de l'un ou plusieurs :
- du transport terrestre, tel que le train, le camion ou la voiture,
- du transport maritime,
- du transport aérien, et
- de la fourniture d'un ou de plusieurs itinéraires d'expédition sur la base des options d'expédition sélectionnées à l'utilisateur ou à un centre logistique.

10. Système selon l'une quelconque des revendications précédentes, dans lequel les paramètres du colis comprennent en outre au moins l'une :
- de la forme du colis,
- des caractéristiques extérieures du colis, par exemple s'il s'agit d'un sac, d'une caisse en bois, d'une boîte en carton ou d'un conteneur métallique.

11. Système selon la revendication 1, dans lequel le système est également configuré pour fournir une aide à la décision à un utilisateur en ce qui concerne l'expédition d'un colis d'un premier emplacement à un second emplacement, par exemple en fournissant des informations pertinentes à l'utilisateur sur le dispositif d'affichage.

12. Système selon la revendication 1 ou 11, dans lequel le système est également configuré pour fournir les informations douanières d'exportation et/ou d'importation requises et/ou fournir les paramètres de colis et/ou les paramètres d'expédition à une base de données différente de la première base de données selon la revendication 1.

13. Système selon la revendication 1, la section de réception comprenant en outre :
- une trappe définissant une ouverture de la section de réception,
- un mécanisme de verrouillage conçu pour sécuriser la trappe lorsque le système n'est pas utilisé.

14. Système selon la revendication 13, dans lequel le mécanisme de verrouillage permet d'ouvrir la trappe uniquement lorsque toutes les données et tous les paramètres pertinents ont été fournis par l'utilisateur.

15. Système selon l'une quelconque des revendications 1 à 14, comprenant en outre un module de transmission de données en champ proche en connexion de données avec le dispositif d'entrée/sortie et/ou le processeur et dans lequel l'utilisateur peut télécharger des données et des paramètres prédéfinis relatifs au colis, à partir d'un dispositif auxiliaire contenant lesdites données et paramètres prédéfinis, vers ledit module de transmission de données en champ proche, tel qu'un smartphone.

16. Utilisation d'un système d'aide à la décision pour un utilisateur, selon l'une quelconque des revendications 1 à 15.

17. Produit de programme informatique permettant à un système informatique d'exécuter les opérations du système selon les revendications 1 à 16 lorsqu'il est téléchargé ou chargé dans le système informatique.
